# EUROPEAN PATENT APPLICATION

(11) **EP 4 794 019 A1**
(43) Date of publication of application: **19.08.2026**
(21) Application number: 25867150.2
(22) Date of filing: 03.11.2025
(51) Int. Cl.: H01M 4/36, H01M 4/525, H01M 4/505, C01G 53/504, H01M 4/131, H01M 10/052, H01M 4/02

(54) **POSITIVE ELECTRODE ACTIVE MATERIAL, PREPARATION METHOD THEREFOR, POSITIVE ELECTRODE COMPRISING SAME, AND LITHIUM SECONDARY BATTERY**

(30) Priority: 23.12.2024 KR 20240194802
(71) Applicant: LG ENERGY SOLUTION, LTD., Seoul 07335 (KR)
(72) Inventor: YOO, Seung Su, Yuseong-gu, Daejeon 34122 (KR); JO, Chi Ho, Yuseong-gu, Daejeon 34122 (KR); KIM, Jong Woo, Yuseong-gu, Daejeon 34122 (KR); BAE, Joong Ho, Yuseong-gu, Daejeon 34122 (KR); AHN, Hee Ju, Yuseong-gu, Daejeon 34122 (KR); KIM, Ha Neul, Yuseong-gu, Daejeon 34122 (KR)
(74) Representative: Hoffmann Eitle
(86) International application number: PCT/KR2025/017855
(87) International publication number: WO 2026/141939

(57) **Abstract**

A positive electrode active material includes a lithium nickel-based oxide having the content of nickel (Ni) ranging from about 50 mol% to 70 mol% among total transition metals, and a coating layer formed on a surface of the lithium nickel-based oxide and including cobalt (Co) and lithium (Li). The coating layer has a form including both dot-shaped and film-shaped phases, and the weight ratio of lithium (Li) to cobalt (Co) in the positive electrode active material ranges from about 5 to 20.

## Description

### TECHNICAL FIELD

### CROSS-REFERENCE TO RELATED APPLICATIONS

This application is based on and claims priority from Korean Patent Application No. 10-2024-0194802 filed on December 23, 2024, with the Korean Intellectual Property Office, the disclosure of which is incorporated herein in its entirety by reference.

### TECHNICAL FIELD

The present disclosure relates to a positive electrode active material, a method of producing the same, and a positive electrode and a lithium secondary battery including the same. More specifically, it relates to a positive electrode active material with excellent low-temperature output characteristics, a method of producing the same, and a positive electrode and a lithium secondary battery including the same.

### BACKGROUND

A lithium secondary battery is generally produced by interposing a separator between a positive electrode including a positive electrode active material formed of a lithium-containing transition metal oxide and a negative electrode including a negative electrode active material capable of storing lithium ions to form an electrode assembly, inserting the electrode assembly into a battery case, injecting a non-aqueous electrolyte serving as a medium for transferring lithium ions, and then sealing the case.

Such a lithium secondary battery is used not only in portable electronic devices such as mobile phones or notebook computers but also in, for example, electric vehicles (EV), and the demand for the lithium secondary battery is rapidly increasing due to the recent expansion in the distribution of electric vehicles. A lithium secondary battery used in an electric vehicle is required to have high energy density, high output characteristics, and durability that allows long-term use even under harsh environments such as low or high temperatures.

However, lithium secondary batteries developed to date for electric vehicles suffer from limited performance in winter or cold regions. This is because lithium ion mobility decreases in low-temperature environments, increasing resistance and causing a sharp decline in capacity and output.

Therefore, there is a demand for the development of lithium secondary batteries with superior low-temperature output characteristics.

### DISCLOSURE OF THE INVENTION

### TECHNICAL PROBLEM

To solve the problems described above, The present disclosure provides a positive electrode active material and a method of producing the same, in which the positive electrode active material includes a coating layer including cobalt (Co) and lithium (Li) and having both a dot-shaped phase and a film-shaped phase, and the weight ratio of lithium (Li) to cobalt (Co) in the positive electrode active material is defined to have a specific value, thereby enhancing the lithium-ion mobility even at low temperatures, and suppressing an increase in resistance.

The present disclosure also provides a positive electrode including the positive electrode active material having excellent low-temperature output characteristics, and a lithium secondary battery including the same.

### TECHNICAL SOLUTION

[1] The present disclosure provides a positive electrode active material including a lithium nickel-based oxide having the content of nickel (Ni) ranging from 50 mol% to 70 mol% among total transition metals, and a coating layer formed on a surface of the lithium nickel-based oxide and including cobalt (Co) and lithium (Li). The coating layer has a form including both a dot-shaped phase and a film-shaped phase, and the weight ratio of lithium (Li) to cobalt (Co) in the positive electrode active material ranges from 5 to 20.
[2] In [1], the weight of cobalt (Co) in the positive electrode active material may range from 8,000 ppm to 12,000 ppm based on the total weight of the positive electrode active material.
[3] In [1] or [2], the weight of lithium (Li) in the positive electrode active material may range from 80,000 ppm to 110,000 ppm based on the total weight of the positive electrode active material.
[4] In at least one of [1] to [3], the lithium nickel-based oxide may be a single-particle-type lithium nickel-based oxide including 50 or fewer nodules.
[5] In at least one of [1] to [4], the lithium nickel-based oxide may be represented by Formula 1:

   [Formula 1] LiₐNi_{b}Co_{c}M¹_{d}M²ₑO₂

   In Formula 1, M¹ includes at least one selected from the group consisting of Mn and Al, M² includes at least one selected from the group consisting of Ti, W, Mg, Al, Zr, Y, Ba, Ca, Sr, Ta, Nb, and Mo, and "a," "b," "c," "d," and "e" satisfy 0.9 ≤ a ≤ 1.1, 0.5 ≤ b ≤0.7, 0 < c < 0.5, 0< d <0.5, and 0 ≤ e ≤0.2.
[6] In at least one of [1] to [5], the lithium nickel-based oxide may have an average particle diameter (D₅₀) ranging from 1 µm to 5 µm.
[7] In at least one of [1] to [6], the positive electrode active material may have a BET specific surface area ranging from 0.5 m²/g to 1.2 m²/g.
[8] The present disclosure provides a method of producing a positive electrode active material, the method including: (S1) preparing a lithium nickel-based oxide having a nickel (Ni) content ranging from 50 mol% to 70 mol% among total transition metals; and (S2) mixing the lithium nickel-based oxide with a cobalt (Co)-containing raw material and a lithium (Li)-containing raw material, followed by heat treatment at a temperature ranging from 700 °C to 900 °C to form a coating layer including cobalt (Co) and lithium (Li) on a surface of the lithium nickel-based oxide. The coating layer has a form including both a dot-shaped phase and a film-shaped phase, and the weight ratio of lithium (Li) to cobalt (Co) in the positive electrode active material ranges from 5 to 20.
[9] In [8], the step (S2) may include (S2a) mixing the positive electrode active material with an aluminum (Al) raw material and a tungsten (W) raw material, followed by heat treatment at a temperature ranging from 400 °C to 500 °C.
[10] In [8] or [9], the step (S2) may include mixing such that the weight ratio of lithium (Li) to cobalt (Co) ranges from 0.1 to 1.5.
[11] In at least one of [8] to [10], in the step (S2), the mixing may be performed such that the cobalt (Co)-containing raw material is included in an amount ranging from 150 ppm to 500 ppm based on a total weight of the lithium nickel-based oxide.
[12] In at least one of [8] to [11], in the step (S2), the mixing may be performed such that the lithium (Li)-containing raw material is included in an amount ranging from 100 ppm to 300 ppm based on a total weight of the lithium nickel-based oxide.
[12] The present disclosure provides a positive electrode including the positive electrode active material according to at least one of [1] to [7].
[13] The present disclosure provides a lithium secondary battery including the positive electrode of [12], a negative electrode disposed to face the positive electrode, and an electrolyte.

### ADVANTAGEOUS EFFECTS

In the positive electrode active material according to the present disclosure, a lithium (Li)-containing raw material is additionally introduced during a cobalt (Co) coating process such that the weight ratio of lithium (Li) to cobalt (Co) in the positive electrode active material satisfies a range from 5 to 20. Accordingly, since the coating layer includes both a dot-shaped phase and a film-shaped phase, a lithium ion pathway is provided in the coating layer. Therefore, when the positive electrode active material according to the present disclosure is applied, an effect of improving output characteristics, including low-temperature output characteristics, of a lithium secondary battery may be obtained.

### BRIEF DESCRIPTION OF THE DRAWINGS

FIG. 1 is a scanning electron microscope (SEM) image of a positive electrode active material prepared according to Example 1 of the present disclosure.
FIG. 2 is a scanning electron microscope (SEM) image of a positive electrode active material prepared according to Comparative Example 1.
FIG. 3 is a scanning electron microscope (SEM) image of a positive electrode active material prepared according to Comparative Example 2.

### MODE FOR CARRYING OUT THE INVENTION

Hereinafter, the present disclosure will be described in more detail.

The terms or words used in the specification and claims should not be construed as limited to their ordinary or dictionary meanings, but should be construed as having meanings and concepts consistent with the technical concept of the present disclosure based on the principle that an inventor may appropriately define the concepts of terms in order to explain his or her own invention in the best way.

In the present disclosure, the term "single-particle-type" refers to a particle composed of 50 or fewer nodules and refers to a concept including a single particle composed of one nodule and a quasi-single particle, which is a composite of two to fifty nodules.

The term "nodule" refers to a sub-particle unit constituting a single particle or a quasi-single particle, which may be either a single crystal having no crystalline grain boundary or a polycrystal in which grain boundaries are not visually observed at a magnification of 5,000x to 20,000x using a scanning electron microscope.

In the present disclosure, the term "secondary particle" refers to a particle formed by aggregation of a plurality of primary particles, specifically, several tens to several hundreds of primary particles. For example, the secondary particle may be an aggregate of more than 50 primary particles.

In the present disclosure, the term "particle" is a concept including any one or all of a single particle, a quasi-single particle, a primary particle, a nodule, and a secondary particle.

In the present disclosure, the term "average particle diameter D₅₀" refers to a particle size corresponding to 50% of the cumulative volume in a volume cumulative particle size distribution of the powder to be measured, and may be measured using a laser diffraction method. For example, after dispersing the powder to be measured in a dispersion medium, the powder may be introduced into a commercially available laser diffraction particle size analyzer (*e.g.*, MT 3000 manufactured by Microtrac), and irradiated with ultrasonic waves at about 28 kHz with an output of 60 W. Then, a volume cumulative particle size distribution graph is obtained, and the particle size corresponding to 50% of the cumulative volume is determined, thereby measuring the average particle diameter D₅₀.

### Positive Electrode Active Material

First, a positive electrode active material according to an embodiment of the present disclosure will be described.

A positive electrode active material according to the present disclosure includes a lithium nickel-based oxide having the content of nickel (Ni) ranging from 50 mol% to 70 mol% among total transition metals, and a coating layer formed on a surface of the lithium nickel-based oxide and including cobalt (Co) and lithium (Li). The coating layer has a form including both a dot-shaped phase and a film-shaped phase, and the weight ratio of lithium (Li) to cobalt (Co) in the positive electrode active material ranges from 5 to 20.

### (1) Lithium nickel-based oxide

In the positive electrode active material according to the present disclosure, the lithium nickel-based oxide has the content of nickel (Ni) ranging from 50 mol% to 70 mol% among total transition metals.

The lithium nickel-based oxide may be represented by Formula 1 below.

[Formula 1] LiₐNi_{b}Co_{c}M¹_{d}M²ₑO₂

In Formula 1, M¹ includes at least one selected from the group consisting of Mn and Al, and may be, preferably, Mn.

The symbol M² is a doping element doped at transition metal sites included in the lithium nickel-based oxide, and when M² is included, effects such as suppression of cation mixing in the positive electrode active material and suppression of structural changes during repeated charge and discharge may be obtained. M² may include at least one selected from the group consisting of Ti, W, Mg, Al, Zr, Y, Ba, Ca, Sr, Ta, Nb, and Mo.

In Formula 1, the symbol "a" represents a molar ratio of lithium in the lithium nickel-based oxide and may satisfy 0.9 ≤ a ≤ 1.1, 0.95 ≤ a ≤ 1.1, or 1 ≤ a ≤ 1.08. When "a" satisfies the above range, excellent capacity characteristics may be exhibited, and a stable layered structure may be formed.

In the lithium nickel-based oxide, the symbol "b" represents a molar ratio of nickel among total metals excluding lithium, and may satisfy 0.5 ≤ b ≤ 0.7, 0.55 ≤ b ≤ 0.65, or 0.58 ≤ b ≤ 0.62.

The symbol "c" represents a molar ratio of cobalt among total metals excluding lithium in the lithium nickel-based oxide, and may satisfy 0 < c < 0.5, 0.01 ≤ c < 0.5, 0.05 ≤ c < 0.5, 0.1 ≤ c < 0.5, or 0.1 ≤ c ≤ 0.4.

The symbol "d" represents a molar ratio of M¹ among total metals excluding lithium in the lithium nickel-based oxide, and may satisfy 0 < d < 0.5, 0.01 ≤ d < 0.5, 0.05 ≤ d < 0.5, 0.1 ≤ d < 0.5, or 0.1 ≤ d ≤ 0.4.

The symbol "e" represents a molar ratio of M² among total metals excluding lithium in the lithium nickel-based oxide, and may satisfy 0 ≤ e ≤ 0.2, 0 ≤ e ≤ 0.15, or 0 ≤ e ≤ 0.10.

The lithium nickel-based oxide may be a single-particle-type lithium nickel-based oxide including 50 or fewer nodules.

In the case of the single-particle-type lithium nickel-based oxide, compared with a secondary-particle-type lithium nickel-based oxide, particle breakage caused by rolling during the manufacture of a positive electrode is reduced, and structural stability is excellent under high-temperature and/or high-voltage conditions. Accordingly, when the single-particle-type lithium nickel-based oxide is applied, degradation of the positive electrode under high-temperature or high-voltage conditions is reduced, and generation of fine particles after electrode manufacture is reduced, resulting in reduced gas generation caused by side reactions between the fine particles and the electrolyte. Therefore, the application of the single-particle-type lithium nickel-based oxide is advantageous for manufacturing a lithium secondary battery having long-cycle life characteristics.

In the present disclosure, the single-particle-type lithium nickel-based oxide may include 50 or fewer, preferably 30 or fewer, more preferably 1 to 25, or most preferably 1 to 15 nodules. When the single-particle-type lithium nickel-based oxide includes an excessive number of nodules, particle breakage during electrode manufacture increases, and internal crack formation caused by volume expansion and contraction of the nodules during charge and discharge also increases, which may result in deterioration of high-temperature cycle characteristics and high-temperature storage characteristics.

Meanwhile, the single-particle-type lithium nickel-based oxide may have the Ni content ranging from 50 mol% to 70 mol%, preferably 55 mol% to 65 mol%, more preferably 58 mol% to 62 mol% among total metals excluding lithium. In the case of a single-particle-type lithium nickel-based oxide having a Ni content ranging from 50 mol% to 70 mol%, structural stability at high voltages is superior compared with that of a lithium nickel-based oxide having a Ni content exceeding 70 mol% or having a secondary-particle-type structure, thus minimizing degradation of life characteristics during high-voltage operation. For example, as the Ni content in the lithium nickel-based oxide increases, the number of highly reactive Ni⁴⁺ ions increases, and consequently, structural stability of the positive electrode active material is deteriorated during charge and discharge, resulting in accelerated degradation of the positive electrode. This phenomenon becomes more pronounced during high-voltage operation. Accordingly, the present disclosure applies a lithium nickel-based oxide having a Ni content of 70 mol% or less, thereby suppressing degradation in lifespan characteristics caused by deterioration of the active material during high-voltage operation. When the Ni content is too low, capacity characteristics may deteriorate. Thus, the Ni content of the lithium nickel-based oxide may range from 50 mol% to 70 mol%.

The lithium nickel-based oxide may have an average particle diameter (D₅₀) ranging from 1 µm to 5 µm, preferably 1 µm to 3 µm, or more preferably 1.5 µm to 2.5 µm. when an average particle diameter (D50) of a lithium nickel-based oxide is too small, processability during electrode manufacturing and electrolyte impregnability are reduced, which may lead to an increase in electrochemical resistance. Conversely, when the average particle diameter (D₅₀) is too large, resistance increases and output characteristics are degraded.

### (2) Coating Layer

A coating layer is formed on the lithium nickel-based oxide so as to secure a lithium-ion migration path to improve lithium-ion mobility in a low-temperature environment, to suppress direct contact between the electrolyte and the lithium nickel-based oxide to reduce gas generation during charge and discharge, and to prevent transition metal elution.

The coating layer includes cobalt (Co) and lithium (Li). The cobalt (Co) serves to suppress side reactions between the surface of the positive electrode active material and the electrolyte, thereby preventing deterioration of the positive electrode active material in a low-temperature environment. The lithium (Li) acts as a medium that allows cobalt (Co) to be uniformly coated within the coating layer and serves to enhance lithium-ion mobility at the interface of the positive electrode active material. Accordingly, when the coating layer includes both cobalt (Co) and lithium (Li), low-temperature output characteristics may be improved.

The coating layer has a form including both a dot-shaped phase and a film-shaped phase. In the positive electrode active material according to the present disclosure, a lithium-containing raw material is additionally introduced during the cobalt (Co) coating process. In this case, while a cobalt (Co) coating layer having a uniform thickness is formed on the surface of the lithium nickel-based oxide, a portion of the metal oxide may be transformed into a lithium oxide and locally agglomerated on the surface, so that the coating layer includes both a dot-shaped phase and a film-shaped phase. The dot-shaped phase may improve lithium-ion conductivity by providing pathways between dots for intercalating and deintercalating lithium ions. The film-shaped phase minimizes direct contact between the positive electrode active material and the electrolyte, thereby suppressing side reactions occurring at the surface, and by including a material having high electronic conductivity, such as LiCoO₂, the film-shaped phase may improve lithium-ion conductivity and enhance low-temperature output characteristics.

The positive electrode active material according to the present disclosure includes the above-described lithium nickel-based oxide and a coating layer formed on the surface of the lithium nickel-based oxide.

The weight ratio of lithium (Li) to cobalt (Co) in the positive electrode active material ranges from 5 to 20. When a weight ratio of lithium (Li) to cobalt (Co) in the positive electrode active material is less than 5, a lithium (Li) deficiency occurs, leading to oxygen vacancies and cation mixing within the positive electrode active material. Furthermore, a spinel phase is formed in a coating layer, which hinders the mobility of lithium ions at low temperatures, thereby causing a problem of increased resistance in low-temperature environments. On the other hand, when the weight ratio of lithium (Li) to cobalt (Co) in the positive electrode active material exceeds 20, excessive lithium content leads to the formation of lithium by-products such as Li₂CO₃ and LiOH on the surface, which increases interfacial resistance and thus deteriorates low-temperature power characteristics
Specifically, the weight ratio of lithium (Li) to cobalt (Co) in the positive electrode active material may range from 5 to 20, preferably 8 to 15, more preferably 9 to 11. When the ratio satisfies the above range, side reactions between the surface of the positive electrode active material and the electrolyte may be suppressed, oxygen release may be reduced, and cation mixing may be prevented, thereby enhancing lithium-ion mobility and improving low-temperature output characteristics.

The weight of cobalt (Co) in the positive electrode active material may range from 8,000 ppm to 12,000 ppm, preferably 9,000 ppm to 10,000 ppm, or more preferably 9,500 ppm to 9,700 ppm based on the total weight of the positive electrode active material.

The weight of lithium (Li) in the positive electrode active material may range from 80,000 ppm to 110,000 ppm, preferably 90,000 ppm to 105,000 ppm, more preferably 98,000 ppm to 100,000 ppm based on the total weight of the positive electrode active material.

When the weights of cobalt (Co) and lithium (Li) in the positive electrode active material satisfy the above ranges, a coating layer having low lithium-ion migration barrier energy may be formed, thereby improving lithium-ion mobility even in a low-temperature environment and enhancing low-temperature output characteristics.

The positive electrode active material may have a BET specific surface area ranging from 0.5 m²/g to 1.2 m²/g, preferably 0.6 m²/g to 1.0 m²/g, more preferably 0.7 m²/g to 0.9 m²/g. When the specific surface area satisfies the above range, lithium by-products on the surface of the positive electrode active material may be removed through an appropriate reaction with the electrolyte, thereby ensuring lithium-ion mobility even in a low-temperature environment and improving low-temperature output characteristics.

### Method of Producing Positive Electrode Active Material

A method of producing a positive electrode active material according to the present disclosure includes: a step of preparing a lithium nickel-based oxide having a nickel (Ni) content ranging from 50 mol% to 70 mol% among total transition metals (S1); and a step of mixing the lithium nickel-based oxide with a cobalt (Co)-containing raw material and a lithium (Li)-containing raw material, followed by heat treatment at a temperature ranging from 700 °C to 900 °C to form a coating layer including cobalt (Co) and lithium (Li) on a surface of the lithium nickel-based oxide (S2). The coating layer has a form including both a dot-shaped phase and a film-shaped phase, and the weight ratio of lithium (Li) to cobalt (Co) in the positive electrode active material ranges from 5 to 20.

Hereinafter, each step of the method of producing a positive electrode active material will be specifically described.

### Step (S1)

First, a lithium nickel-based oxide having a nickel (Ni) content ranging from 50 mol% to 70 mol% among total transition metals is prepared.

The lithium nickel-based oxide may be produced by mixing a transition metal precursor having a nickel (Ni) content ranging from 50 mol% to 70 mol% among total transition metals and a lithium-containing raw material, and calcining the mixture.

At this time, the transition metal precursor may be commercially available or may be produced according to a method known in the art for preparing such a precursor.

For example, the transition metal precursor may be prepared by performing a coprecipitation reaction while stirring after introducing a transition metal aqueous solution, an ammonium cation complexing agent, and a basic compound into a reactor.

The transition metal aqueous solution may be prepared by dissolving a transition metal-containing raw material in a solvent such as water. For example, it may be prepared by dissolving nickel (Ni)-containing, cobalt (Co)-containing, and manganese (Mn)-containing raw materials in water.

In the present disclosure, the transition metal-containing raw material may be an acetate, carbonate, nitrate, sulfate, halide, sulfide, or oxide of a transition metal.

Specifically, the nickel (Ni)-containing raw material may include, but is not limited to, NiO, NiCO₃·2Ni(OH)₂·4H₂O, NiC₂O₄·2H₂O, Ni(NO₃)₂·6H₂O, NiSO₄, NiSO₄·6H₂O, a nickel halide, or a combination thereof.

The cobalt (Co)-containing raw material may include, but is not limited to, CoSO₄, Co(OCOCH₃)₂·4H₂O, Co(NO₃)₂·6H₂O, CoSO₄·7H₂O, or a combination thereof.

The manganese (Mn)-containing raw material may include, but is not limited to, Mn₂O₃, MnO₂, Mn₃O₄, MnCO₃, Mn(NO₃)₂, MnSO₄·H₂O, manganese acetate, a manganese halide, or a combination thereof.

At this time, the input amount of each transition metal-containing raw material may be determined in consideration of the molar ratio of transition metals in the final positive electrode active material to be produced.

Meanwhile, the ammonium cation complexing agent may include one or more compounds selected from the group consisting of NH₄OH, (NH₄)₂SO₄, NH₄NO₃, NH₄Cl, CH₃COONH₄, and (NH₄)₂CO₃, and may be introduced into the reactor in the form of a solution prepared by dissolving the compound in a solvent. At this time, the solvent may be water or a mixture of water and an organic solvent (specifically, alcohol) that is uniformly miscible with water.

The basic compound may include one or more compounds selected from the group consisting of NaOH, KOH, and Ca(OH)₂, and may also be introduced into the reactor in the form of a solution prepared by dissolving the compound in a solvent. The solvent may be water or a mixture of water and an organic solvent (specifically, alcohol) that is uniformly miscible with water.

When the transition metal aqueous solution, ammonium cation complexing agent, and basic compound are introduced into the reactor and stirred as described above, transition metals in the transition metal aqueous solution are co-precipitated to form precursor particles in the form of transition metal hydroxides.

At this time, the transition metal aqueous solution, ammonium cation complexing agent, and basic compound are introduced in such amounts that the pH of the reaction solution falls within a desired range.

Once the transition metal precursor particles are formed by the above method, the precursor is obtained by being separated from the reaction solution. For example, the reaction solution may be filtered to separate the precursor from the solution, and the separated precursor may be washed and dried to obtain the precursor. When necessary, processes such as pulverizing and/or classification may be performed.

Next, a lithium nickel-based oxide is produced by mixing the transition metal precursor and a lithium-containing raw material and then calcining the mixture. When necessary, metal-containing raw materials including M¹ and M² may also be mixed and calcined together.

The lithium (Li)-containing raw material may include a lithium-containing sulfate, nitrate, acetate, carbonate, oxalate, citrate, halide, hydroxide, or oxyhydroxide, and examples thereof may include Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but are not limited thereto.

Meanwhile, the lithium-containing raw material and the precursor may be mixed such that the molar ratio of total metals in the precursor to lithium ranges from 1:1 to 1.2:1, preferably 1:1 to 1.1:1. When the mixing ratio of metals in the precursor to the lithium-containing raw material satisfies the above range, the layered crystal structure of the lithium nickel-based oxide may be well developed, so that a positive electrode material having excellent capacity characteristics and structural stability may be obtained.

Meanwhile, the calcination may be performed at a temperature capable of forming single particles or quasi-single particles. To form single particles or quasi-single particles, calcination should be performed at a higher temperature than that used for producing conventional secondary-particle-type lithium nickel-based oxides. For example, when the precursor composition is the same, the calcination may be performed at a temperature 30 °C to 100 °C higher than that used for producing conventional secondary-particle-type lithium nickel-based oxides. The calcination temperature for forming single particles or quasi-single particles may vary depending on the metal composition in the precursor. For example, when forming a single-particle-type or quasi-single-particle-type mid-Ni lithium nickel-based oxide having a nickel (Ni) content ranging from 50 mol% to 70 mol%, the calcination temperature may range from 900 °C to 1,100 °C, preferably 940 °C to 1,000 °C. When the calcination temperature satisfies the above range, a single-particle-type or quasi-single-particle-type positive electrode material having excellent electrochemical properties may be produced. When the calcination temperature is lower than 900 °C, a secondary-particle-type positive electrode material may be produced, whereas when the temperature exceeds 1,100 °C, excessive calcination may occur, resulting in incomplete formation of the layered crystal structure and degradation of electrochemical properties.

The calcination may be performed for 10 hours to 14 hours under an oxygen atmosphere. As used herein, the term "oxygen atmosphere" refers to an atmosphere containing a sufficient amount of oxygen for the calcination, including an ambient atmosphere. Specially, the calcination may be performed under an atmosphere having a higher oxygen partial pressure than the ambient atmosphere.

### Step (S2)

Next, the lithium nickel-based oxide, a cobalt (Co)-containing raw material, and a lithium (Li)-containing raw material are mixed and heat-treated at a temperature ranging from 700 °C to 900 °C to form a coating layer including cobalt (Co) and lithium (Li) on the surface of the lithium nickel-based oxide.

As described above, the method of producing a positive electrode active material according to the present disclosure may prevent oxygen deficiency and cation mixing phenomena caused by a lack of lithium (Li) and improve lithium-ion mobility at low temperatures by additionally introducing a lithium (Li)-containing raw material during the process of forming the coating layer including cobalt (Co).

At this time, the cobalt (Co)-containing raw material may include one or more selected from oxides, nitrides, halides, hydroxides, carbonates, nitrates, or combinations thereof containing cobalt (Co). For example, the cobalt (Co) raw material may include Co(OH)₂, Co₃O₄, or a combination thereof, but is not limited thereto.

The lithium (Li)-containing raw material may include one or more selected from oxides, nitrides, halides, hydroxides, carbonates, nitrates, or combinations thereof containing lithium (Li). For example, the lithium (Li)-containing raw material may include Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

The step (S2) is performed at a temperature ranging from about 700 °C to 900 °C and may be performed at a temperature ranging from 700 °C to 800 °C, preferably 720 °C to 770 °C. When performed within the above temperature range, the coating layer may include both a dot-shaped phase and a film-shaped phase, thereby improving low-temperature resistance characteristics.

In the step (S2), the mixing may be performed such that the weight ratio of lithium (Li) to cobalt (Co) ranges from 0.1 to 1.5, preferably 0.1 to 0.9, more preferably 0.4 to 0.6. When the ratio satisfies the above range, side reactions between the surface of the positive electrode active material and the electrolyte may be suppressed, oxygen release may be reduced, and cation mixing may be prevented, thereby enhancing lithium-ion mobility and improving low-temperature output characteristics.

The cobalt (Co)-containing raw material may be mixed so as to be included in an amount ranging from 150 ppm to 500 ppm, preferably 200 ppm to 400 ppm, more preferably 250 ppm to 350 ppm based on the total weight of the lithium nickel-based oxide. When mixed within the above range, side reactions between the surface of the positive electrode active material and the electrolyte may be suppressed, thereby preventing degradation of the positive electrode active material in a low-temperature environment.

The lithium (Li)-containing raw material may be mixed so as to be included in an amount ranging from 100 ppm to 300 ppm, preferably 120 ppm to 250 ppm, more preferably 120 ppm to about 180 ppm based on the total weight of the lithium nickel-based oxide. When mixed within the above range, oxygen release may be reduced, and lithium-ion mobility at the interface of the positive electrode active material may be improved, thereby enhancing low-temperature output characteristics.

The step (S2) may further include a step of mixing the positive electrode active material with an aluminum (Al) raw material and a tungsten (W) raw material, followed by heat treatment at a temperature ranging from 400 °C to 500 °C (S2a). When aluminum (Al) and tungsten (W) are further included in the coating layer of the positive electrode active material produced as described above, oxygen desorption of the positive electrode active material may be suppressed, and side reactions with the electrolyte may be prevented, thereby preventing degradation of the positive electrode active material even in a low-temperature environment.

At this time, the aluminum (Al) raw material may include one or more selected from oxides, nitrides, halides, hydroxides, carbonates, nitrates, or combinations thereof that contain aluminum (Al). For example, the aluminum (Al) raw material may include Al₂O₃, AlN, Al(NO₃)₃, or a combination thereof, but is not limited thereto.

The tungsten (W) raw material may include one or more selected from oxides, nitrides, halides, hydroxides, carbonates, nitrates, or combinations thereof that contain tungsten (W). For example, the tungsten (W) raw material may WO₃, Li₃WO₄, (NH₄)₁₀W₁₂O₄₁·5H₂O, or a combination thereof, but is not limited thereto.

The step (S2a) may be performed at a temperature ranging from 400 °C to 500 °C, preferably 420 °C to 480 °C, more preferably 440 °C to 460 °C. When performed within the above range, the coating layer may have a form including both a dot-shaped phase and a film-shaped phase, thereby improving lithium-ion conductivity and enhancing low-temperature output characteristics.

The positive electrode active material produced as described above may have a coating layer including both a dot-shaped phase and a film-shaped phase, and since the ratio of the lithium (Li) weight to the cobalt (Co) weight in the positive electrode active material satisfies a range from 5 to 20, side reactions between the surface of the positive electrode active material and the electrolyte may be suppressed, oxygen release may be reduced, and cation mixing may be prevented, thereby improving lithium-ion mobility and enhancing low-temperature output characteristics.

### Positive Electrode

Next, the positive electrode according to the present disclosure includes the above-described positive electrode active material. Specially, the positive electrode may include a positive electrode active material layer including the above-described positive electrode active material, more specially, the positive electrode may include a positive electrode current collector and a positive electrode active material layer disposed on the positive electrode current collector 14 and including the above-described positive electrode active material.

Hereinafter, respective components of the positive electrode according to the present disclosure will be described.

### (1) Positive Electrode Current Collector

As the positive electrode current collector, various positive electrode current collectors used in the relevant technical field may be used. For example, the positive electrode current collector may include stainless steel, aluminum, nickel, titanium, fired carbon, or a surface-treated material in which the surface of aluminum or stainless steel is treated with, for example, carbon, nickel, titanium, or silver. The positive electrode current collector may typically have a thickness ranging from 3 µm to 500 µm, and a fine uneven pattern may be formed on the surface of the positive electrode current collector to improve the adhesion of the positive electrode active material. The positive electrode current collector may be used in various forms such as a film, sheet, foil, net, porous body, foam body, or nonwoven fabric body.

### (2) Positive Electrode Active Material Layer

The positive electrode active material layer may be disposed on the positive electrode current collector and may be located, for example, on one surface or both surfaces of the positive electrode current collector. The positive electrode active material layer may have a single-layer or multilayer structure of two or more layers.

The positive electrode active material layer may include a positive electrode active material, a positive electrode conductive agent, and a positive electrode binder.

The positive electrode active material may be the above-described positive electrode active material according to the present disclosure, that is, a positive electrode active material including a lithium nickel-based oxide and a coating layer formed on the lithium nickel-based oxide and including KLiSO₄. The characteristics of the positive electrode active material are as described above.

The positive electrode active material may be included in an amount ranging from 90 wt% to 99 wt%, preferably 92 wt% to 98 wt%, more preferably 94 wt% to 98 wt% based on the total weight of the positive electrode active material layer. When the above range is satisfied, the energy density and capacity characteristics of the lithium secondary battery to which the positive electrode is applied may be improved.

The positive electrode conductive agent is used to impart electrical conductivity to the electrode and may be used without particular limitation as long as it exhibits electronic conductivity without causing a chemical change in the battery in which it is used. Examples thereof may include: graphite such as natural graphite or artificial graphite; carbon-based materials such as carbon black, acetylene black, Ketjen black, channel black, furnace black, lamp black, thermal black, carbon fiber, or carbon nanotubes; metal powders or metal fibers of, for example, copper, nickel, aluminum, or silver; conductive whiskers of, for example, zinc oxide or potassium titanate; conductive metal oxides such as titanium oxide; or conductive polymers such as polyphenylene derivatives, which may be used either alone or in combination of two or more thereof. The positive electrode conductive agent may typically be included in an amount ranging from 0.1 wt% to 10 wt%, preferably 0.1 wt% to 8 wt%, more preferably 0.1 wt% to 5 wt% based on the total weight of the positive electrode active material layer.

The positive electrode binder serves to enhance adhesion between particles of the positive electrode material and between the positive electrode material and the positive electrode current collector. Examples thereof may include: fluororesin-based binders such as polyvinylidene fluoride (PVDF) or polytetrafluoroethylene (PTFE); rubber-based binders such as styrene-butadiene rubber (SBR), acrylonitrile-butadiene rubber, or styrene-isoprene rubber; cellulose-based binders such as carboxymethyl cellulose (CMC), starch, hydroxypropyl cellulose, or regenerated cellulose; polyalcohol-based binders such as polyvinyl alcohol; polyolefin-based binders such as polyethylene or polypropylene; polyimide-based binders; polyester-based binders; and silane-based binders, which may be used either alone or in combination of two or more thereof. The positive electrode binder may be included in an amount ranging from 1 wt% to 10 wt%, preferably 0.5 wt% to 10 wt%, more preferably 1 wt% to 8 wt% based on the total weight of the positive electrode active material layer.

The positive electrode may be produced by a method known in the relevant technical field. For example, the positive electrode may be produced by preparing a positive electrode slurry by mixing a positive electrode active material, a positive electrode binder, and a positive electrode conductive agent in a solvent, coating the positive electrode slurry onto a positive electrode current collector, and drying and rolling the coated layer. Alternatively, the positive electrode 10 may be produced by casting the positive electrode slurry onto a separate support, peeling off the resulting film from the support, and laminating the film obtained thereby onto the positive electrode current collector. As the solvent of the positive electrode slurry, solvents generally used for positive electrode slurries in the relevant technical field may be used. For example, dimethyl sulfoxide (DMSO), isopropyl alcohol, N-methyl-2-pyrrolidone (NMP), acetone, water, or a mixture thereof may be used, but the present disclosure is not limited thereto. The solvent may be used in an amount sufficient to dissolve or disperse the positive electrode active material, the positive electrode conductive agent, and the positive electrode binder, and to provide a viscosity suitable for uniform coating of the positive electrode slurry.

### Lithium Secondary Battery

A lithium secondary battery according to an embodiment of the present disclosure includes an electrode assembly including the positive electrode according to the present disclosure and a negative electrode disposed to face the positive electrode and a non-aqueous electrolyte. Optionally, the lithium secondary battery according to the present disclosure may further include a separator interposed between the positive electrode and the negative electrode.

Since the positive electrode is the same as described above, descriptions of the positive electrode will be omitted hereinafter, and the remaining components will be described below.

### (1) Negative Electrode

In the lithium secondary battery according to the present disclosure, the negative electrode may include a negative electrode active material layer including a negative electrode active material, and specifically, the negative electrode may include a negative electrode current collector and a negative electrode active material layer disposed on at least one surface of the negative electrode current collector.

The negative electrode current collector is not particularly limited as long as it has high conductivity and does not cause a chemical change in the battery. For example, copper, stainless steel, aluminum, nickel, titanium, calcined carbon, a material obtained by treating the surface of copper or stainless steel with carbon, nickel, titanium, or silver, or an aluminum-cadmium alloy may be used. In addition, the negative electrode current collector may typically have a thickness ranging from 3 to 500 µm. Similarly to the positive electrode current collector, a fine uneven pattern may be formed on the surface of the current collector to enhance the binding force of the negative electrode active material. For example, the negative electrode current collector may be used in various forms such as a film, a sheet, a foil, a net, a porous body, a foam body, and a nonwoven material.

The negative electrode active material layer may be disposed on the negative electrode current collector, and specially the negative electrode may be located on one surface or both surfaces of the negative electrode current collector. The negative electrode active material layer may have a single-layer structure or a multilayer structure including two or more layers.

When the negative electrode active material layer has a multilayer structure including two or more layers, respective layers may differ from each other in terms of the type and/or content of the negative electrode active material, negative electrode binder, and/or negative electrode conductive agent. By forming the negative electrode active material layer as a multilayer structure and making the compositions of respective layers differ from each other, the performance characteristics of the battery, such as rapid charging performance and output characteristics, may be appropriately adjusted.

Meanwhile, as the negative electrode active material, a compound capable of reversibly intercalating and deintercalating lithium may be used. Examples thereof may include: carbon-based materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloys, Sn alloys, or Al alloys; metal oxides capable of intercalating and deintercalating lithium, such as SiO_{q} (0 < q < 2), SnO₂, vanadium oxides, and lithium vanadium oxides; or composites including the above-described metallic compounds and carbon-based materials, such as Si-C composites or Sn-C composites, which may be used either alone or in combination of two or more thereof.

Meanwhile, as the carbon-based material, both low-crystallinity carbon and high-crystallinity carbon may be used. The low-crystallinity carbon may be soft carbon or hard carbon, and the high-crystallinity carbon may include high-temperature calcined carbon such as amorphous carbon, plate-shaped, flake-shaped, spherical, or fibrous natural graphite or artificial graphite, kish graphite, pyrolytic carbon, mesophase pitch-based carbon fiber, meso-carbon microbeads, mesophase pitches, and petroleum or coal tar pitch-derived cokes.

Preferably, the negative electrode active material may be a carbon-based negative electrode active material. In this case, the carbon-based negative electrode active material may include, for example, natural graphite, artificial graphite, graphitized carbon fiber, amorphous carbon, soft carbon, hard carbon, or a combination thereof. More preferably, the carbon-based negative electrode active material may include natural graphite and artificial graphite.

The carbon-based negative electrode active material may have an average particle diameter (D₅₀) ranging from 2 µm to 30 µm, preferably 5 µm to 30 µm.

The negative electrode active material may be included in an amount ranging from 80 wt% to 98 wt%, preferably 90 wt% to 98 wt%, more preferably 93 wt% to 98 wt% based on the total weight of the negative electrode active material layer. When the content of the negative electrode active material satisfies the above range, excellent energy density may be achieved.

The negative electrode active material layer may further include a negative electrode conductive agent and/or a negative electrode binder together with the negative electrode active material.

The negative electrode conductive agent is used to impart electrical conductivity to the negative electrode and may be used without particular limitation as long as it exhibits electronic conductivity without causing a chemical change in the battery. Examples thereof may include: carbon-based materials such as carbon black, acetylene black, Ketjen black, channel black, furnace black, lamp black, thermal black, carbon fiber, and carbon nanotubes; metal powders or metal fibers of, for example, copper, nickel, aluminum, or silver; conductive whiskers of, for example, zinc oxide or potassium titanate; conductive metal oxides such as titanium oxide; and conductive polymers such as polyphenylene derivatives, which may be used either alone or in combination of two or more thereof.

The negative electrode conductive agent may typically be included in an amount ranging from 0.1 wt% to 10 wt%, preferably 0.1 wt% to 8 wt%, more 0.1 wt% to 5 wt% based on the total weight of the negative electrode active material layer.

The negative electrode binder serves to enhance adhesion between negative electrode active material particles and between the negative electrode active material and the negative electrode current collector. Examples thereof may include: polyvinylidene fluoride (PVDF); vinylidene fluoride-hexafluoropropylene copolymer (PVDF-co-HFP); polyvinyl alcohol; polyacrylonitrile; carboxymethyl cellulose (CMC); starch; hydroxypropyl cellulose; regenerated cellulose; polyvinylpyrrolidone; polytetrafluoroethylene; polyethylene; polypropylene; ethylene-propylene-diene monomer rubber (EPDM rubber); sulfonated EPDM; styrene-butadiene rubber (SBR); fluororubber; or various copolymers thereof, which may be used either alone or in combination of two or more thereof.

The negative electrode binder may be included in an amount ranging from 0.1 wt% to 10 wt%, preferably 0.5 wt% to 10 wt%, more preferably 1 wt% to 8 wt% based on the total weight of the negative electrode active material layer.

The negative electrode may be produced by a method known in the relevant technical field. For example, the negative electrode may be produced by preparing a negative electrode slurry by mixing a negative electrode active material, a negative electrode binder, and a negative electrode conductive agent in a solvent, coating the negative electrode slurry onto a negative electrode current collector, and drying and rolling the coated layer. Alternatively, the negative electrode 20 may be produced by casting the negative electrode slurry onto a separate support to form a film, peeling off the film from the support, and laminating the film onto the negative electrode current collector.

As the solvent of the negative electrode slurry, solvents generally used in the relevant technical field may be used. For example, dimethyl sulfoxide (DMSO), isopropyl alcohol, N-methyl-2-pyrrolidone (NMP), acetone, water, or a mixture thereof may be used, but the present disclosure is not limited thereto. The solvent may be used in an amount sufficient to dissolve or disperse the negative electrode active material, the negative electrode conductive agent, and the negative electrode binder, and to provide a viscosity suitable for uniform coating of the negative electrode slurry.

### (2) Electrolyte

The electrolyte according to the present disclosure may include a lithium salt and an organic solvent.

The lithium salt may be used without particular limitation as long as it is a compound capable of providing lithium ions used in a lithium secondary battery. Specifically, the lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt may be in a range from 0.1 M to 5.0 M, preferably 0.1 M to 3.0 M. When the concentration of the lithium salt falls within the above range, the electrolyte has appropriate conductivity and viscosity to enable excellent electrolyte performance and to allow lithium ions to effectively migrate.

The organic solvent may include at least one selected from cyclic carbonate-based organic solvents, linear carbonate-based organic solvents, linear ester-based organic solvents, and cyclic ester-based organic solvents.

The cyclic carbonate-based organic solvent, which is a high-viscosity organic solvent, may include at least one organic solvent selected from the group of consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

In addition, the linear carbonate-based organic solvent, which is a low-viscosity and low-dielectric-constant organic solvent, may include at least one organic solvent selected from the group of consisting of dimethyl carbonate (DMC), diethyl carbonate (DEC), dipropyl carbonate, ethyl methyl carbonate (EMC), methyl propyl carbonate, and ethyl propyl carbonate, and may include, specifically, ethyl methyl carbonate (EMC).

The linear ester-based organic solvent may include at least one organic solvent selected from methyl acetate, ethyl acetate, propyl acetate, methyl propionate, ethyl propionate, propyl propionate, and butyl propionate.

The cyclic ester-based organic solvent may include at least one organic solvent selected from butyrolactone, valerolactone, and caprolactone.

According to an embodiment, the electrolyte according to the present disclosure may include ethylene carbonate and dimethyl carbonate as the organic solvent.

Meanwhile, the electrolyte may further include other additives in addition to the above-described electrolyte components for the purposes of improving battery lifespan characteristics, suppressing capacity reduction, and enhancing discharge capacity.

Such other additives may include at least one selected from the group consisting of cyclic carbonate compounds, halogen-substituted carbonate compounds, sulfone compounds, sulfate compounds, borate compounds, nitrile compounds, benzene compounds, amine compounds, silane compounds, and lithium salt compounds different from the lithium salt included in the electrolyte.

For example, the other additives may include one or more compounds selected from the group consisting of vinylene carbonate (VC), vinyl ethylene carbonate, fluoroethylene carbonate (FEC), 1,3-propane sultone (PS), 1,4-butane sultone, ethenesultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, lithium bis(fluorosulfonyl)imide (LiFSI), lithium bis(trifluoromethane sulfonyl)imide (LiTFSI), LiPO₂F₂, LiODFB, lithium bis(oxalato)borate (LiB(C₂O₄)₂; LiBOB), and LiBF₄.

The other additives may be included in an amount ranging from 0.01 wt% to 20 wt%, preferably 0.05 wt% to 5.0 wt%, based on the total weight of the electrolyte. When the content of the other additive is less than about 0.01 wt%, the effects of improving low-temperature output, high-temperature storage characteristics, and high-temperature lifespan characteristics may be insignificant. When the content of the other additive exceeds about 20 wt%, excessive side reactions may occur in the electrolyte during charging and discharging of the battery. Alternatively, when the SEI film-forming additives are added in an excessive amount, they may not sufficiently decompose at high temperatures, and may remain in the electrolyte as unreacted materials or as precipitates at room temperature. As a result, side reactions that deteriorate the lifespan or resistance characteristics of the secondary battery may occur.

### (3) Separator

The separator physically separates a negative electrode and a positive electrode and provides a path for lithium-ion migration, and any separator commonly used in lithium secondary batteries may be used without particular limitation. In this case, the separator may be interposed between the positive electrode and the negative electrode.

For example, a porous polymer film made of a polyolefin-based polymer, such as an ethylene homopolymer, a propylene homopolymer, an ethylene/butene copolymer, an ethylene/hexene copolymer, or an ethylene/methacrylate copolymer, or a laminated structure including two or more layers thereof, may be used. In addition, conventional porous non-woven fabrics such as non-woven fabrics made of, for example, high melting point glass fiber or polyethylene terephthalate fiber may be used. In addition, a coated separator containing a ceramic component or a polymer material to ensure heat resistance or mechanical strength may be used, and may optionally be used in a single-layer or multilayer structure.

The lithium secondary battery according to the present disclosure may be advantageously applied to portable devices such as mobile phones, laptop computers, and digital cameras, as well as to electric vehicle fields such as hybrid electric vehicles (HEVs). The lithium secondary battery according to the present disclosure may be particularly useful in the field of electric vehicles because excellent output characteristics may be achieved even under low-temperature conditions.

According to another embodiment of the present disclosure, a battery module including the lithium secondary battery according to the present disclosure as a unit cell and a battery pack including the same are provided.

The battery module or the battery pack may be used as a power source for one or more medium- or large-sized devices such as power tools, electric vehicles (EVs) including hybrid electric vehicles (HEVs) and plug-in hybrid electric vehicles (PHEVs), or power storage systems.

Hereinafter, the present disclosure will be described in more detail with reference to examples. However, the following examples are provided only to enable those skilled in the art to fully understand and easily implement the present disclosure, and the scope of the present disclosure is not limited to the following examples.

### Examples and Comparative Examples

### Example 1

### (1) Preparation of Lithium Nickel-Based Oxide

Ni₀.₆Co₀.₁Mn₀.₃(OH)₂ and Li₂CO₃ were mixed at a molar ratio of Li:(Ni+Co+Mn) = 1.05:1, and the mixture was calcined in an oxygen atmosphere at 960 °C for 12 hours to prepare a single-particle-type lithium nickel-based oxide having a composition of Ni₀.₆Co₀.₁Mn₀.₃O₂.

### (2) Formation of Coating Layer

The single-particle-type lithium nickel-based oxide, Co(OH)₂, and Li₂CO₃ were mixed at a weight ratio of 100:3:1.5 (lithium nickel-based oxide:Co:Li), and the mixture was heat-treated at 750 °C for 10 hours to prepare a positive electrode active material having a coating layer including cobalt (Co) and lithium (Li) on the lithium nickel-based oxide.

### Comparative Example 1

Except that, in the coating layer formation step (2), Li₂CO₃ was not mixed and the single-particle-type lithium nickel-based oxide and cobalt (Co) were mixed at a weight ratio of 100:3, the positive electrode active material was prepared in the same manner as in Example 1.

### Comparative Example 2

Except that, in the coating layer formation step (2), the single-particle-type lithium nickel-based oxide, Co(OH)₂, and Li₂CO₃ were mixed at a weight ratio of 100:3:5 (single-particle-type lithium nickel-based oxide:Co:Li), the positive electrode active material was prepared in the same manner as in Example 1.

The positive electrode active materials prepared in Example 1 and Comparative Examples 1 and 2 were analyzed by inductively coupled plasma (ICP) analysis to measure the contents of cobalt (Co) and lithium (Li) in the positive electrode active material, and the results are shown in Table 1 below.

**[Table 1]**

| | Co weight [ppm] | Li weight [ppm] | Li weight/Co weight |
|---|---|---|---|
| Example 1 | 9650 | 99430 | 10.3 |
| Comparative Example 1 | 9560 | 38290 | 4.0 |
| Comparative Example 2 | 9810 | 213100 | 21.7 |

### Experimental Example 1: Surface Observation of Positive Electrode Active Material

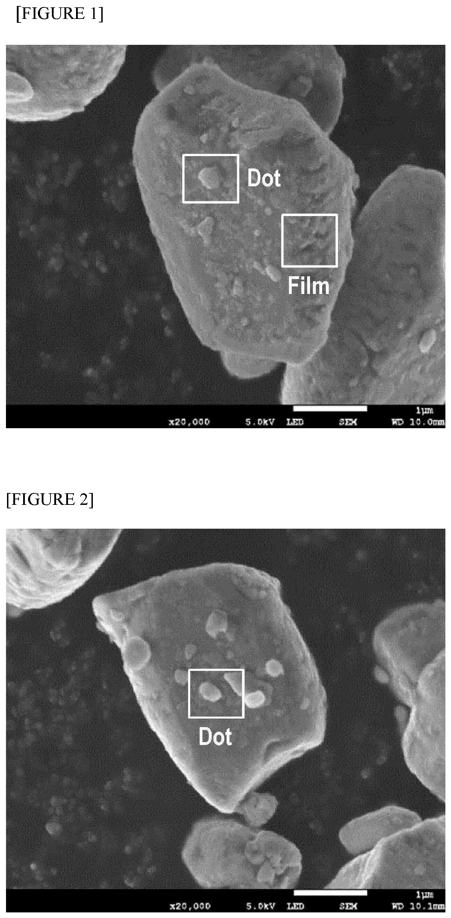

Scanning electron microscope (SEM) images of the positive electrode active materials prepared in Example 1 and Comparative Examples 1 and 2 were obtained using a scanning electron microscope device. These SEM images are illustrated in FIGS. 1 to 3.

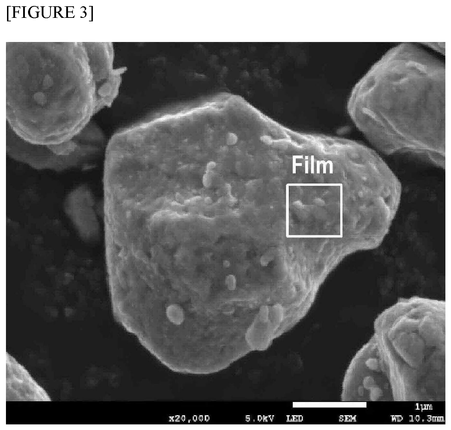

Referring to FIG. 1, it may be seen that the positive electrode active material prepared in Example 1 includes both dot-shaped and film-shaped phases, whereas referring to FIG. 2, the positive electrode active material prepared in Comparative Example 1 includes only dot-shaped phases, and referring to FIG. 3, the positive electrode active material prepared in Comparative Example 2 includes only film-shaped phases.

### Experimental Example 2: Evaluation of Low-Temperature Output Characteristics

### <Preparation of Lithium Secondary Battery>

Each of the positive electrode active materials prepared in Example 1 and Comparative Examples 1 and 2 was mixed with a positive electrode conductive material (carbon black) and a positive electrode binder (PVdF), in a weight ratio of 95:2:3 in N-methylpyrrolidone to prepare a positive electrode slurry. The positive electrode slurry was coated on an aluminum current collector, dried, and rolled to prepare a positive electrode.

A lithium metal electrode was used as the negative electrode.

A porous polyethylene separator was interposed between the positive and negative electrodes prepared as described above to produce an electrode assembly. The electrode assembly was then placed in a case, and an electrolyte was injected into the case to produce a lithium secondary battery.

At this time, the electrolyte was prepared by dissolving 1 M lithium hexafluorophosphate (LiPF₆) in an organic solvent mixture of ethylene carbonate, dimethyl carbonate, and diethyl carbonate mixed in a weight ratio of 1:2:1.

### <Evaluation of Low-Temperature Output Characteristics>

The lithium secondary battery was charged to SOC 20 at 0.1 C rate, and then discharged at 2 C rate for 20 seconds at -10 °C to measure the voltage variation (ΔV). The measured voltage variation ΔV was divided by the current I to calculate the resistance (R = ΔV/I).

The calculation results are shown in Table 2 below.

**[Table 2]**

| | Low-temperature resistance (Ω) |
|---|---|
| Example 1 | 124.6 |
| Comparative Example 1 | 189.3 |
| Comparative Example 2 | 173.5 |

Referring to Table 2, it may be seen that the lithium secondary battery including the positive electrode active material prepared in Example 1 exhibits significantly lower low-temperature resistance compared to the lithium secondary battery including the positive electrode active material prepared in each of Comparative Example 1 and Comparative Example 2.

## Claims

1. A positive electrode active material comprising:
a lithium nickel-based oxide having a content of nickel (Ni) ranging from 50 mol% to 70 mol% among total transition metals, and
a coating layer formed on a surface of the lithium nickel-based oxide and including cobalt (Co) and lithium (Li),
wherein the coating layer has a form including both a dot-shaped phase and a film-shaped phase, and
a weight ratio of lithium (Li) to cobalt (Co) in the positive electrode active material ranges from 5 to 20.

2. The positive electrode active material according to claim 1, wherein the weight of cobalt (Co) in the positive electrode active material ranges from 8,000 ppm to 12,000 ppm based on a total weight of the positive electrode active material.

3. The positive electrode active material according to claim 1, wherein the weight of lithium (Li) in the positive electrode active material ranges from 80,000 ppm to 110,000 ppm based on a total weight of the positive electrode active material.

4. The positive electrode active material according to claim 1, wherein the lithium nickel-based oxide is a single-particle-type lithium nickel-based oxide including 50 or fewer nodules.

5. The positive electrode active material according to claim 1, wherein the lithium nickel-based oxide is represented by Formula 1:
[Formula 1] LiₐNi_{b}Co_{c}M¹_{d}M²ₑO₂
wherein, M¹ includes at least one selected from the group consisting of Mn and Al, M² includes at least one selected from the group consisting of Ti, W, Mg, Al, Zr, Y, Ba, Ca, Sr, Ta, Nb, and Mo, and "a," "b," "c," "d," and "e" satisfy 0.9 ≤ a ≤ 1.1, 0.5 ≤ b ≤0.7, 0 < c < 0.5, 0< d <0.5, and 0 ≤ e ≤0.2.

6. The positive electrode active material according to claim 1, wherein the lithium nickel-based oxide has an average particle diameter (D₅₀) ranging from 1 µm to 5 µm.

7. The positive electrode active material according to claim 1, wherein the positive electrode active material has a BET specific surface area ranging from 0.5 m²/g to 1.2 m²/g.

8. A method of producing a positive electrode active material, the method comprising:
(S1) preparing a lithium nickel-based oxide having a content of nickel (Ni) ranging from 50 mol% to 70 mol% among total transition metals; and
(S2) mixing the lithium nickel-based oxide with a cobalt (Co)-containing raw material and a lithium (Li)-containing raw material, followed by heat treatment at a temperature ranging from 700 °C to 900 °C to form a coating layer including cobalt (Co) and lithium (Li) on a surface of the lithium nickel-based oxide,
wherein the coating layer has a form including both a dot-shaped phase and a film-shaped phase, and
a weight ratio of lithium (Li) to cobalt (Co) in the positive electrode active material ranges from 5 to 20.

9. The method of preparing a positive electrode active material according to claim 8, wherein (S2) includes (S2a) mixing the positive electrode active material with an aluminum (Al) raw material and a tungsten (W) raw material, followed by heat treatment at a temperature ranging from 400 °C to 500 °C.

10. The method of preparing a positive electrode active material according to claim 8, wherein in (S2), the mixing is performed such that the weight ratio of lithium (Li) to cobalt (Co) ranges from 0.1 to 1.5.

11. The method of preparing a positive electrode active material according to claim 8, wherein in (S2), the mixing is performed such that the cobalt (Co)-containing raw material is included in an amount ranging from 150 ppm to 500 ppm based on a total weight of the lithium nickel-based oxide.

12. The method of preparing a positive electrode active material according to claim 8, wherein in (S2), the mixing is performed such that the lithium (Li)-containing raw material is included in an amount ranging from 100 ppm to 300 ppm based on a total weight of the lithium nickel-based oxide.

13. A positive electrode comprising the positive electrode active material according to any one of claim 1 to 7.

14. A lithium secondary battery comprising:
the positive electrode according to claim 13;
a negative electrode disposed to face the positive electrode, and
an electrolyte.
